# EUROPEAN PATENT APPLICATION

(11) **EP 1 780 531 A1**
(43) Date of publication of application: **02.05.2007**
(21) Application number: 05765520.1
(22) Date of filing: 11.07.2005
(51) Int. Cl.: G01N 21/35

(54) **PEPTIDE OR PROTEIN PHOSPHORYLATION ANALYZER, PHOSPHORYLATION DISCRIMINATION PROGRAM, AND RECORDING MEDIUM FOR THE PROGRAM**

(30) Priority: 27.07.2004 JP 2004218308
(71) Applicant: Sumitomo Electric Industries, Ltd., Osaka-shi, Osaka 541-0041 (JP)
(72) Inventor: NAKATA, Motomi c/o Osaka Works of Sumitotmo El.Ind.,Ltd., Osaka-shi, Osaka (JP); AWAZU, Kunio c/o Osaka Works of Sumitotmo El.Ind.,Ltd., Osaka-shi, Osaka (JP)
(74) Representative: Cross, Rupert Edward Blount
(86) International application number: PCT/JP2005/012745
(87) International publication number: WO 2006/011352

(57) **Abstract**

To provide an analyzer configured to enable to determine whether or not phosphoric acid is bound to a peptide or protein in a short time according to a simple procedure, and to provide a program for use in the analyzer, and a recording medium for storing the program.

A spectrum of a peptide or protein in the infrared region is determined so as to specify the type of a phosphorylated amino acid in the peptide or protein based on a peak position in a region of 1,000 to 1,100 [cm⁻¹] of the spectrum.

## Description

### Technical Field

The present invention relates to analyzers of peptides or proteins. More specifically, it relates to analyzers and programs for determining whether or not a peptide or protein is phosphorylated and recording media for storing the programs.

### Background Art

Proteins are translated and produced based on the information in genome (DNA). Their activities and functions are controlled by undergoing modifications after translation (posttranslational modification) under various physiological conditions. Most well known posttranslational modifications of proteins include phosphorylation and dephosphorylation which are considered to be important reactions for controlling the activation or inactivation of proteins.

Posttranslational modifications of proteins, include hundred or more modifications such as methylation, acetylation, and glycosylation. Phosphorylation is one of such major posttranslational modifications. Many of intracellular proteins are phosphorylated in eukaryotic cells. Phosphorylation of a protein momentarily and reversibly occurs and is one of fundamental processes for signal transduction pathway as a major control mode for intracellular activities. The term "phosphorylation" used herein refers to the binding of phosphoric acid to a residue of a specific amino acid among amino acids constituting a peptide or protein. The term "dephosphorylation" refers to the removal of phosphoric acid from a phosphorylated amino acid.

Phosphotransferases (protein kinases) and phosphatases (protein phosphatases) transmit stimulations from extracellular regions into cells, and serve to control various cell functions such as metabolism, growth, differentiation, signal transduction, and movement. Specifically, such protein kinases and protein phosphatases act as a central regulatory factor in intracellular signal transduction pathways and cell cycles. In contrast, phosphorylation is known to have a state varying depending on stresses and diseases, and it is considered that a phosphorylation-induced abnormality may probably be involved in various chronic diseases and oncogenesis. Therefore, undoubtedly, an insight into the modification reactions, including phosphorylation and dephosphorylation, is important for a breakthrough in physiological regulatory mechanisms, to provide drug discoveries, and to make pathological analyses.

These enzymes act to bond between a phosphate group and a protein or cleave or remove a bound phosphate group from a protein. Specifically, protein kinases act upon an amino acid at a specific site of a protein to bind a phosphoric acid to a residue of the amino acid to thereby change a function of the protein. In contrast, phosphatases act upon, as a target, a phosphorylated form of an amino acid at a specific site of a protein and serve to cleave the bond between the amino acid and phosphoric acid to convert an original residue of the amino acid to thereby change the function thereof.

Phosphorylation of a protein by the action of a protein kinase selectively occurs upon specific amino acids. Specifically, phosphorylation occurs as a result of binding of phosphoric acid to residues of three specific amino acids, threonine (T), serine (S) and tyrosine (Y), among twenty amino acids relating to protein synthesis.

When a protein undergoes a phosphorylation or dephosphorylation reaction, the protein has a changed local polarity of its constitutional amino acid residue, and consequently changes its conformation, function and activity.

For example, Ca²⁺/calmodulin-dependent protein kinase (phosphotransferase) undergoes Ca²⁺/calmodulin-independent activation as a result of phosphorylation of threonine residue thereof and is able to phosphorylate another substrate protein. The Ca²⁺/calmodulin-dependent protein kinase is one of major regulatory factors of intracellular Ca²⁺ signals in the central nervous system. Accordingly, determining whether or not Ca²⁺/calmodulin-dependent protein kinase is phosphorylated is an important indicator for monitoring how the central nervous system is activated.

Thus, various methods for determining the presence or absence of phosphorylation have been developed. Patent Document 1, for example, discloses a technique for the detection of phosphorylation of a peptide using a mass spectrometer. Patent Document 2 discloses a technique for the identification of a phosphorylated protein according to two-dimensional gel electrophoresis. Non-patent Document 1 discloses a technique for the detection of a phosphorylated protein according to Western blotting using an specific antibody against a phosphorylated amino acid. Non-patent Document 2 discloses a technique for the quantitation of a peptide or protein by measuring an absorption at a wavelength in the ultraviolet region, for example at 280 nm, using a spectral photometer.
Patent Document 1: Japanese Unexamined Patent Application Publication No. 2002-267674
Patent Document 2: Japanese Unexamined Patent Application Publication No. 2002-306198
Non-patent Document 1: Yoko YAMAGATA, "Ca2+/calmodulin-dependent protein kinase II and neuronal activity", PROTEIN, NUCLEIC ACID AND ENZYME, 47(1):51-57, 2002
Non-patent Document 2: Lecture Series on Biochemical Experiment, 1, Chemistry of Protein II, "2. Quantitation of protein", Tokyo Kagaku Dojin Co., Ltd., pages 23-28, 1981

### Disclosure of Invention

### Problems to be Solved by the Invention

According to the technique disclosed in Patent Document 1, however, a sample peptide must be reacted with a strong acid such as fluoroacetic acid for eight hours to twenty-four hours as a pretreatment so as to detect whether or not the sample peptide contains phosphoric acid. However, fluoroacetic acid is a strong acid and should be carefully treated so as to avoid contact between fluoroacetic acid and the human body, because it may corrode living tissues. In addition, a mass spectrometer is expensive and should be treated by a dedicated operator. Thus, it takes a long time to carry out determination of one sample, and it is difficult to treat a large quantity of samples in a short time according to this technique. It is difficult to carry out the determination at an installation where no dedicated operator serves to operate the mass spectrometer.

According to the technique disclosed in Patent Document 2, a target sample should be treated through the following steps in order to detect whether or not the sample is phosphorylated. Specifically, the sample is dephosphorylated by the reaction of a protein phosphatase in a first step. Two-dimensional electrophoresis is carried out on the sample before and after the reaction of the protein phosphatase in a second step. Whether or not the target sample undergoes electrophoresis at different positions between before and after the protein phosphatase reaction is detected in a third step. The presence or absence of phosphorylation is detected through these steps. A pattern of a protein obtained as a result of two-dimensional electrophoresis used in this technique, however, varies depending on the state of the sample and on subtle changes in conditions for electrophoresis. Consequently, the concentration, pH and other parameters of the sample should be set carefully, and two-dimensional electrophoresis must be always carried out under the same conditions regarding conditions in electrophoresis such as pH and voltage/current, and pH of buffer. Experiences are required to carry out the technique, and it is difficult to treat many samples in one pass of two-dimensional electrophoresis.

According to the technique disclosed in Non-patent Document 1, a sample containing a target protein is subjected to sodium dodecyl sulfate-polyacrylamide gel electrophoresis (SDS-PAGE) to thereby separate fractions on the gel by molecular weights of proteins. The separated gel is then transferred by electric charge to a membrane typically of nitrocellulose, and an antigen-antibody reaction is developed on the transferred membrane. According to this technique, the specificity and sensitivity of the antibody to be reacted with a phosphorylated amino acid are key factors. Antibodies specific to some phosphorylated amino acids have been commercially available. However, when a protein contains two or more different phosphorylated amino acids, a specific antibody should be used to detect whether or not a target amino acid is phosphorylated. The specific antibody herein is an antibody which is reactive only in the case where the target amino acid is phosphorylated. Consequently, a wide variety of corresponding specific antibodies should be used in order to detect a wide variety of proteins present in vivo body. In addition, the number of samples to be detected in one process is limited, and it is difficult to treat a large number of samples in one process according to this technique.

In addition, these detection methods according to the above-mentioned techniques in related art fail to determine, based on measured data, which amino acid is phosphorylated among amino acids to be phosphorylated, including threonine, serine, and tyrosine.

The technique disclosed in Non-patent Document 2 is a process focusing attention on the fact that tryptophan, tyrosine, and phenylalanine have maximum absorptions at around 280 nm in the ultraviolet region. These amino acids are amino acids constituting a peptide or protein. Data obtained according to this process vary depending on the amounts of the amino acids contained in a sample peptide or protein, and it cannot be said as an accurate quantitation, but the process is widely used as a simple and rapid quantitative process. However, analyzing processes of peptides and proteins using spectral photometers are only used in the ultraviolet region, as in the quantitation process just mentioned above. In addition, determination using spectral photometers as in the quantitation process is regarded as a simplified process. Investigations have not been made to apply the determination technique to analyses requiring accuracy and sensitivity, as in the determination of whether or not phosphoric acid is bound to a peptide or protein.

As is described above, phosphorylation of peptides and proteins is determined according to the above-mentioned various techniques only by some of experienced researchers only according to necessity in their respective research themes. Although information regarding the detection of phosphorylation is useful in diagnoses and therapies of diseases, it has been difficult to accumulate the information.

Under these circumstances, an object of the present invention is to provide an analyzer configured to carry out determination on whether or not phosphoric acid is bound to a peptide or protein in a short time according to a simple procedure. Another object of the present invention is to provide a program for use in the analyzer, and a recording medium for storing the program.

Yet another object of the present invention is to provide an analyzer for determining the type of a phosphorylated amino acid of a peptide or protein. Another object of the present invention is to provide a program for use in the analyzer, and a recording medium for storing the program.

### Means for Solving the Problems

After intensive investigations to achieve the objects, the present inventors have found that whether or not phosphoric acid is bound to a peptide or protein can be determined by analyzing absorption in a specific region of an infrared absorption spectrum of the peptide or protein.

They also have found that a wavenumber at a spectral peak position in a region of 1,000 to 1,100 [cm⁻¹] in the infrared region is a more suitable factor for determining whether or not phosphoric acid is bound to a peptide or protein.

Specifically, according to the present invention, there is provided a phosphorylation analyzer which includes a device for entering information on an infrared absorption spectrum of a peptide or protein, the infrared absorption spectrum being determined using an infrared spectrophotometer; a device for storing the information on infrared absorption spectrum entered by the input device; and a device for producing output of an infrared absorption spectrum determined at least based on the information stored in the storage device. The analyzer includes a device for calculating a peak value contained in the infrared absorption spectrum of the peptide or protein based on the infrared absorption spectrum stored in the storage device, and a device for storing a wavenumber of the peak value, and the analyzer further includes a device for determining whether or not the peptide or protein is phosphorylated by comparing the wavenumber of the peak value with a stored wavenumber of a peak value being contained in an infrared absorption spectrum of a phosphorylated amino acid.

The term "peak position" as used herein refers to a highest position or lowest position in a spectrum with a profile including one crest or trough. The "profile" of a spectrum refers to data of absorbed light in a measured region indicated by a curve and generically includes the shape of a peak such as crest, trough, and shoulder, the peak width, the relative height of the peak as compared with another peak, and the shape of a spectrum including plural peaks.

According to another embodiment of the present invention, the determination device in the phosphorylation analyzer may further include a device for determining which amino acid is phosphorylated among amino acids contained in a peptide or protein to be analyzed.

The phrase "to specify (or determine) the type of an amino acid" used herein refers to determining which amino acid is phosphorylated among twenty different amino acids constituting a peptide or protein. More specifically, it refers to determining whether all the amino acids to be phosphorylated, i.e., threonine, serine and tyrosine, are phosphorylated or any of them is phosphorylated.

According to another embodiment, there is provided a phosphorylation determination program for operating a computer, the computer includes a device for entering information on an infrared absorption spectrum of a peptide or protein, the infrared absorption spectrum being determined using an infrared spectrophotometer, a device for storing the information on infrared absorption spectrum entered by the input device, and a device for producing output of an infrared absorption spectrum determined at least based on the information stored in the storage device. The program is configured to operate the computer using a device for calculating a peak value contained in the infrared absorption spectrum of the peptide or protein based on the infrared absorption spectrum stored in the storage device, and a device for storing a wavenumber of the peak value, to thereby actuate a device for determining whether or not the peptide or protein is phosphorylated based on the difference between the wavenumbers by comparing the wavenumber of the peak value with a stored wavenumber of a peak value contained in an infrared absorption spectrum of a phosphorylated amino acid, and a device for producing output of information concerning whether or not the peptide or protein is phosphorylated.

According to yet another embodiment, the phosphorylation determination program may further include a program configured to actuate a device for determining which amino acid is phosphorylated among amino acids contained in the peptide or protein to be analyzed, and a device for producing output of information concerning which amino acid is phosphorylated.

In addition, there is provided a readable recoding medium storing a program to be used in a computer. The computer includes a device for entering information on an infrared absorption spectrum of a peptide or protein, the infrared absorption spectrum being determined using an infrared spectrophotometer, a device for storing the information on infrared absorption spectrum entered by the input device, a device for producing output of an infrared absorption spectrum determined based on at least the information stored in the storage device, and a device for reading information from a medium readable by the computer. In the medium, the program is the phosphorylation determination program.

### Advantages

The present invention relates to analyzers for determining whether or not a peptide or protein is phosphorylated, phosphorylation determination programs, and recording media for storing the programs. According to the present invention, the following advantages are exhibited. Specifically, samples can be treated in a large quantity, because treatment can be carried out in a short time. Whether or not a peptide or protein is phosphorylated can be determined without experiences, because the determination can be conducted according to a simple procedure. Whether or not threonine, serine, or tyrosine is phosphorylated can be determined without the need for an specific antibody against a phosphorylated amino acid.

### Brief Description of the Drawings

Fig. 1 is a Fourier transform infrared spectroscopy (FT-IR) charts of peptides and phosphorylated peptides.
Fig. 2 is a diagram showing how a FT-IR spectrum of a phosphorylated peptide varies depending on pH.
Fig. 3 is a block diagram showing a phosphorylation analyzer as an embodiment according to the present invention.
Fig. 4 is a flow chart of a data flow in a phosphorylation analyzer as an embodiment according to the present invention.
Fig. 5 is a flow chart showing a flow of program process relating to a phosphorylation determination according to the present invention.

### Reference Numerals

- 10: first storage device
- 11: phosphorylated amino acid determination folder
- 20: FT-IR
- 30: output device
- 31: monitor
- 32: printer
- 40: input device
- 41: keyboard
- 42: mouse
- 50: working memory
- 60: second storage device
- 61: operating system
- 62: spectrum measurement program
- 63: spectrum analyzing program
- 64: phosphorylation determination program
- 65: file write/read program
- 66: data storage folder
- 70: CPU

### Best Mode for Carrying Out the Invention

Next, best mode for carrying out the present invention will be illustrated with reference to the attached drawings as appropriate.

Initially, a method for measuring a spectrum will be illustrated. The measured spectrum constitutes a basis for the determination of a phosphorylated amino acid. The measurement should be carried out in a region of 800 to 2,000 [cm⁻¹]. A device which can determine a spectrum in a region of 1,000 to 1,100 [cm⁻¹] with good precision is preferred in the present invention. This is because the shape of a spectrum in the region of 1,000 to 1,100 [cm⁻¹] changes when phosphoric acid is bound to an amino acid. Fourier transform infrared spectrophotometers (FT-IR) are preferred, of which a micro Fourier transform infrared spectrophotometer equipped with a microscope is more preferred. A microscopic Fourier transform infrared spectrophotometer can carry out measurement of a sample in a trace amount, because infrared rays are focused using an infrared lens, and infrared measurement of a very small region can be carried out with a spatial resolution of 10 µm in diameter.

A spectrum of a region including the above-specified infrared region is measured according to the present invention. A measuring apparatus is not limited, as long as it can carry out measurements in the infrared region. The type of a phosphorylated amino acid can be determined according to the present invention. In particular, whether or not threonine, serine and tyrosine are bound to phosphoric acid can be determined based on a spectrum in the region of 1,000 to 1,100 [cm⁻¹]. The three amino acids can be bound to phosphoric acid. When threonine, serine and tyrosine are phosphorylated, spectral peaks specific to the phosphorylated amino acids are observed in the region, and the type of a phosphorylated amino acid can be determined by comparing and analyzing the peak values.

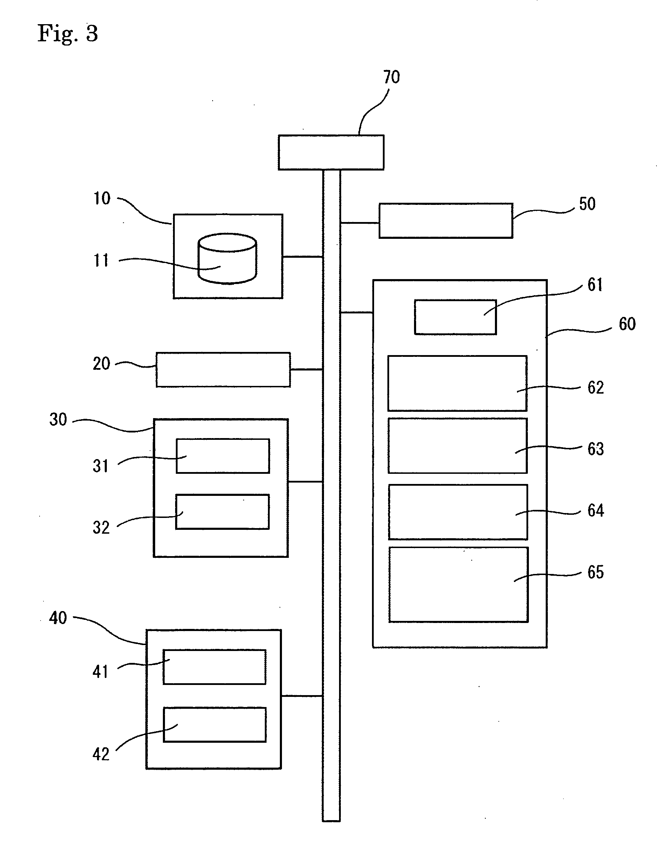

Next, a phosphorylation analyzer according to the present invention will be illustrated. Fig. 3 is a block diagram showing a configuration of a phosphorylation analyzer according to the present invention. Specifically, the phosphorylation analyzer includes an input device 40, a second storage device 60, a first storage device 10, an output device 30, and a central processing unit (CPU 70). The second storage device 60 stores an operating system (OS) 61, a spectrum measurement program 62, a spectrum analyzing program 63, a phosphorylation determination program 64, and a file write/read program. The CPU 70 is configured to control the programs. These components are connected to an FT-IR 20.

The input device 40 is configured to enter various conditions for measurements of spectra and analyses thereof for the determination of phosphorylation. This device is configured to carry out processes relating to the execution of the programs based on spectra measured by the FT-IR 20 and shown in a monitor 31. It is also configured to enter data relating to the control of the FT-IR 20. More specifically, the device can include, for example, a keyboard 41 and a mouse 42. It can also be a device that can receive input through recording media. Examples of recording media are flexible disks, CD-ROM media including CD-RW media, DVD-ROM media including DVD-RW and DVD-RAM media, and magnetic tapes. It can also be a device which receives input for executing the process via a network from a remote computer.

The output device 30 is configured to show, for example, data measured by the FT-IR 20. This device is configured to produce output of, for example, analyzed spectral information obtained by the FT-IR 20 as well as data relating to the control of the FT-IR 20. More specifically, the device can include, for example, a monitor 31 and a printer 32. It can also be a device capable of producing output through recording media such as flexible disks, CD-ROM media including CD-RW media, DVD-ROM media including DVD-RW and DVD-RAM media, and magnetic tapes.

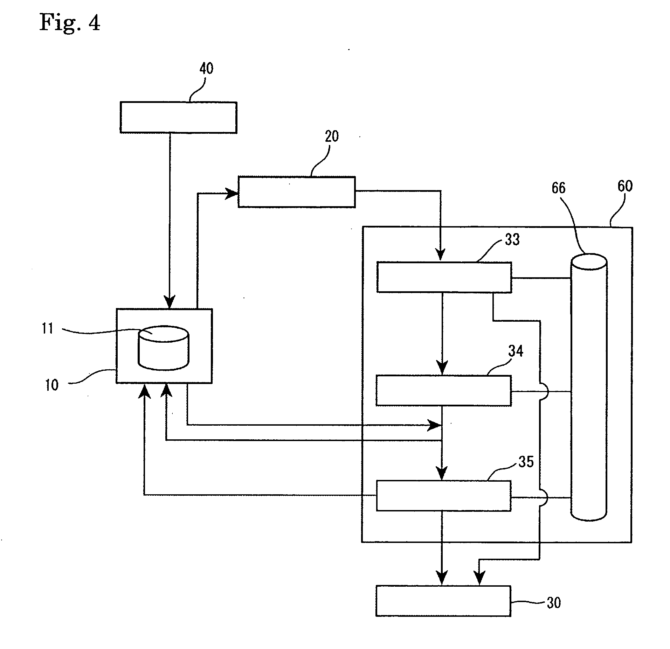

A data flow in the phosphorylation analyzer will be illustrated with reference to the flow chart in Fig. 4. Initially, a sample to be determined on phosphorylation is prepared. A regular procedure for FT-IR measurement is carried out using the FT-IR 20. In this procedure, a spectrum of the sample is measured according to the spectrum measurement program 62, and a spectral data 33 is outputted to the output device 30 typically including a monitor 31.

Next, data of wavenumbers of peak values are calculated based on the spectral data 33 according to the spectrum analyzing program 63. Data 35 for the determination of phosphorylated amino acid(s) are calculated based on the resulting data 34 on the wavenumbers of peak values according to the phosphorylation determination program 64. The first storage device 10 stores a classified region list previously. The data is applied to the classified region list to thereby yield data on a phosphorylated amino acid. The determined data of the amino acid is outputted to the output device 30.

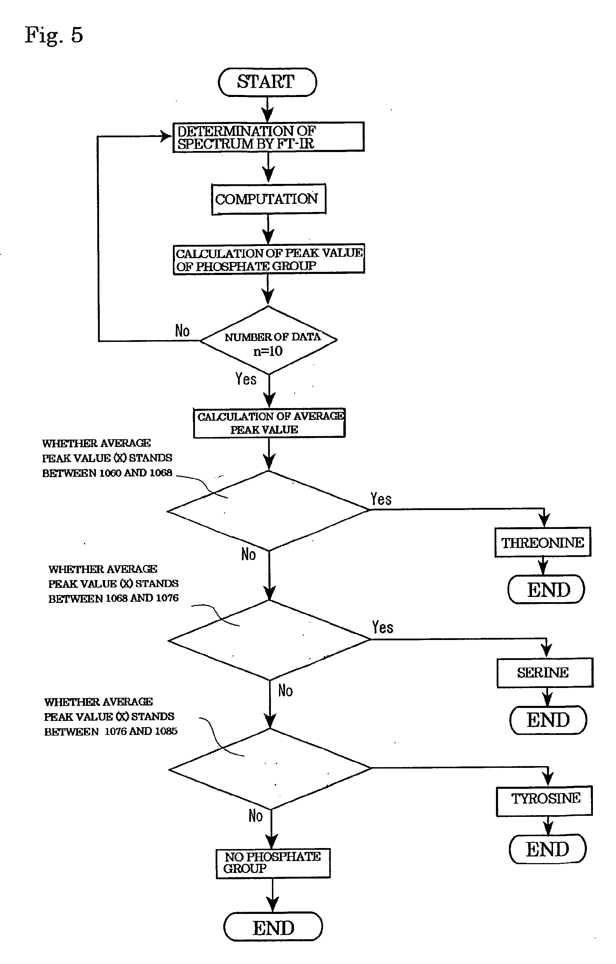

Next, a technique for determining phosphorylation will be illustrated with reference to an analyzing procedure of the flow chart in Fig. 5. Initially, the spectrum measurement program 62 begins operating under the control of the operating system (OS) 61. Conditions for the measurement of an infrared absorption spectrum of the sample are set according to the program, and the infrared absorption spectrum is determined using the FT-IR 20 under the measurement conditions. The measured spectrum and other data are shown typically in the monitor 30.

Next, the spectrum analyzing program 63 begins operating under the control of the operating system (OS). According to this program, the data obtained by the action of the spectrum measurement program are analyzed, and peak positions of the spectrum are calculated. The spectrum analyzing program has only to be capable of calculating wavenumbers of peak positions based on calculated data such as integration of spectral areas and differentiation of profile of the spectrum.

Next, the phosphorylation determination program 64 begins operating under the control of the operating system (OS). This program is configured to determine or detect the presence or absence of phosphorylation based on wavenumbers of peak positions as calculated by the action of the spectrum analyzing program. According to this program, the analysis can be carried out even when only one wavenumber of a peak position has been calculated. However, analysis is preferably carried out based on an average of five or more measurements, for the determination with good precision. More preferably, ten or more measurements are carried out. Fig. 5 is a flow chart of a preferred embodiment in which ten or more measurements are carried out. The average can be determined according to the phosphorylation determination program. Thus, to which region among the following three regions the average of the calculated wavenumbers of peak values corresponds is determined. Specifically, when a wavenumber (X) of a peak value is between 1060 and 1068, it is determined that threonine is phosphorylated. Likewise, it is determined that serine is phosphorylated when "X" is between 1068 and 1076. It is determined that tyrosine is phosphorylated when "X" is between 1076 and 1085. It is determined that no amino acid is phosphorylated when no peak is observed in these regions. The determined results on phosphorylation are stored in the storage device 60 according to the file write/read program 65. The results are outputted by the output device 30 typically including a printer 32.

A data tracing can be stored in the second storage device 60 by the action of the file write/read program 65 at arbitrary time in the steps. When such a traced data is stored, the determination can be restarted from an intermediate step.

### EXAMPLES

The present invention will be illustrated in further detail with reference several examples below. It should be noted, however, these examples are never intended to limit the types of peptides and proteins to be determined using a phosphorylation analyzer, a phosphorylation determination program, and a medium for recording the program according to the present invention.

Samples to be measured can be peptides such as oligopeptides each containing several amino acids, and polypeptides each containing several tens or more of amino acids; and proteins each containing several hundreds of amino acids. The determination on whether or not a sample is phosphorylated can be carried out according to the present invention, even when the sample is, for example, an oligopeptide including eight amino acids or a protein including about six-hundred amino acids.

### [EXPERIMENTAL EXAMPLE 1]

A sequence including an autophosphorylated site of Ca²⁺/calmodulin-dependent protein kinase was synthetically prepared as a sample. Specifically, the synthesis was carried out using a nonamer peptide (C02059B, SEQ ID NO: 2; Met-His-Arg-Gln-Glu-Thr-Val-Asp-Cys) in which phosphate group was introduced into threonine residue at the sixth position. A control used herein was a non-phosphorylated peptide (C02059A, SEQ ID NO: 1; Met-His-Arg-Gln-Glu-Thr- Val-Asp-Cys) in which no phosphate group was introduced into the threonine residue. These peptides were synthesized using a peptide synthesizer. The introduction of phosphate group in the phosphorylated peptide was verified using a mass spectrometer after the preparation of the peptide.

A 1 mg of the sample is dissolved in 500 µl of an acetate buffer. The acetate buffer had been prepared by mixing 5 ml of ultrapure water, 5 ml of methanol, and 10 µl of acetic acid. The ultrapure water had been subjected to reverse osmotic pressure filtration.

The application was conducted in the following manner. The prepared sample solution was applied in three portions of 2 µl, a total of 6 µl, to a spot on barium fluoride (BaF₂) containing an infrared transmittable optical crystal plate (GL Sciences, Inc.) and having a diameter of 13 mm and a thickness of 1 mm. After the present sample solution film was applied, the applied spots were left until they were dried, then same sample solutions were applied in the same spots, and this procedure was 2 times repeated.

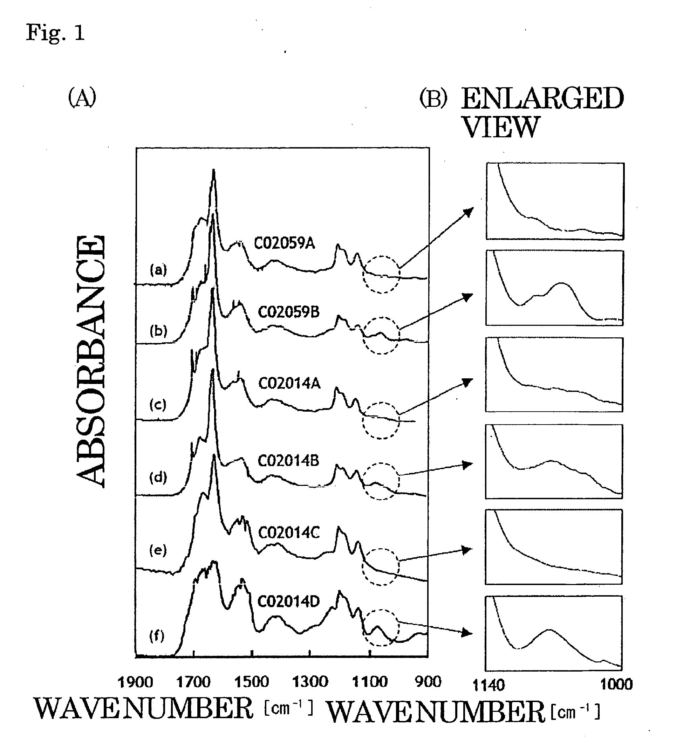

Next, the infrared absorption spectrum of the applied sample was determined using a microscopic Fourier transform infrared spectrophotometer (Nic-plan, Nicolet). Fourier transform infrared spectrophotometry was carried out on a square region with an infrared transmission area of 100 µm by 100 µm according to a transmission technique. The measured results are shown as spectra (a) and (b) in Fig. 1.

### [EXPERIMENTAL EXAMPLE 2]

Microscopic FT-IR measurements were carried out under the conditions of EXAMPLE 1, except for using, as samples, C02059B (SEQ ID NO: 2) which is a peptide having phosphorylated threonine residue; C02014B (SEQ ID NO: 4; Met-His-Arg-Gln-Glu-Ser-Val-Asp-Cys) which is a phosphorylated peptide corresponding to C02059B, except with phosphorylated serine introduced instead of phosphorylated threonine; and C02014D (SEQ ID NO: 6; Met-His-Arg-Gln-Glu-Tyr-Val-Asp-Cys) which is a phosphorylated peptide corresponding to C02059B, except phosphorylated tyrosine introduced instead of phosphorylated threonine. The measured results are shown as spectra (d) and (f) in Fig. 1. Controls used herein were a serine-introduced non-phosphorylated peptide (C02014A, SEQ ID NO: 3; Met-His-Arg-Gln-Glu-Ser-Val-Asp-Cys) and a tyrosine-introduced non-phosphorylated peptide (C02014C, SEQ ID NO: 5; Met-His-Arg-Gln-Glu-Tyr-Val-Asp-Cys). The measured results of the controls are shown as spectra (c) and (e) in Fig. 1.

With reference to Fig. 1, peak positions in the infrared absorption spectra (b), (d), and (e) of the three phosphorylated peptides were compared. The phosphorylated peptides showed peaks specific to the phosphorylation at 1,000 to 1,100 [cm⁻¹]. The wavenumber of peak position was found to vary depending on the type of a phosphorylated amino acid, as described below.

Specifically, it was found that threonine is phosphorylated when the wavenumber (X) of a peak position in an infrared absorption spectrum is between 1060 and 1068; that serine is phosphorylated when "X" is between 1068 and 1076; and that tyrosine is phosphorylated when "X" is between 1076 and 1085. The type of a phosphorylated amino acid can therefore be easily determined by using a program including an algorithm for analyzing which region among these three regions a wavenumber of a peak position corresponds to.

### [EXPERIMENTAL EXAMPLE 3]

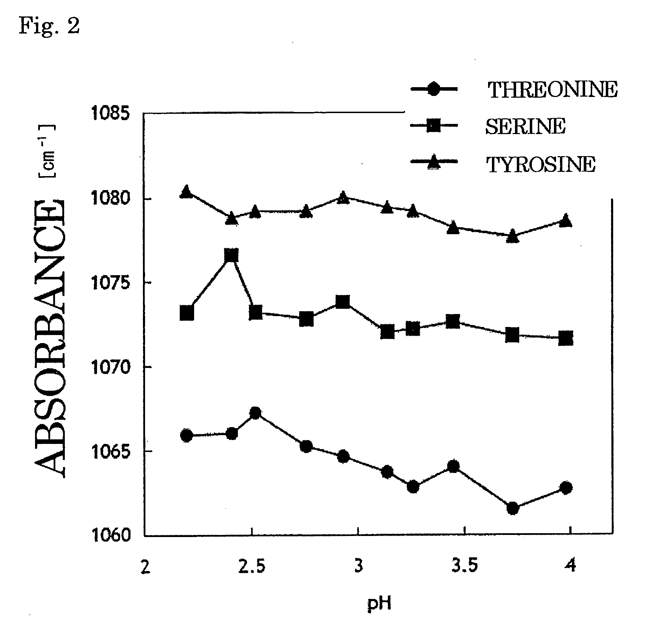

How a peak position varies depending on pH of a sample in the determination of phosphorylation was investigated. Samples used in EXPERIMENTAL EXAMPLES 1 and 2 were adjusted to a pH of 2 to 4, spectra were determined, and wavenumbers of peak positions were calculated. As a result, it was found that relations among peak positions derived from threonine, serine and tyrosine are maintained even if pH of a sample is changed, whereas wavenumbers of peak positions vary depending on pH (Fig. 2). Accordingly, the type of a phosphorylated amino acid can be determined according to this technique.

### Industrial Applicability

Whether or not a target peptide or protein is phosphorylated can be determined by using an analyzer, an analyzing program, and a recording medium for the program according to the present invention without a complicated and experienced procedure. Accordingly, findings leading to diagnoses and therapies of diseases can be possibly accumulated. In addition, the process of regeneration of tissues can be clarified in regenerative medicine by monitoring phosphorylation. As a result, the techniques according to the present invention may lead to development of noble diagnosis methods, drug discoveries, and development of techniques in regenerative medicine.

## Claims

1. A phosphorylation analyzer comprising:
means for entering information on an infrared absorption spectrum of a peptide or protein, the infrared absorption spectrum being determined using an infrared spectrophotometer;
means for storing the information on infrared absorption spectrum entered by the input means; and
means for producing output of an infrared absorption spectrum determined at least based on the information stored in the storage means,
wherein the analyzer further includes means for calculating a peak value contained in the infrared absorption spectrum of the peptide or protein based on the infrared absorption spectrum stored in the storage means, and means for storing a wavenumber of the peak value, and
wherein the analyzer further includes means for determining whether or not the peptide or protein is phosphorylated by comparing the wavenumber of the peak value with a stored wavenumber of a peak value being contained in an infrared absorption spectrum of a phosphorylated amino acid.

2. The phosphorylation analyzer according to claim 1, wherein the determination means further comprises means for specifying which amino acid is phosphorylated among amino acids contained in the peptide or protein to be analyzed.

3. A phosphorylation determination program for operating a computer, the computer comprising:
means for entering information on an infrared absorption spectrum of a peptide or protein, the infrared absorption spectrum being determined using an infrared spectrophotometer;
means for storing the information on infrared absorption spectrum entered by the input means; and
means for producing output of an infrared absorption spectrum determined at least based on the information stored in the storage means,
wherein the program is configured to operate the computer using means for calculating a peak value contained in the infrared absorption spectrum of the peptide or protein based on the infrared absorption spectrum stored in the storage means, and means for storing a wavenumber of the peak value,
to thereby actuate:
means for determining whether or not the peptide or protein is phosphorylated based on the difference between the wavenumbers by comparing the wavenumber of the peak value with a stored wavenumber of a peak value contained in an infrared absorption spectrum of a phosphorylated amino acid; and
means for producing output of information concerning whether or not the peptide or protein is phosphorylated.

4. The phosphorylation determination program according to claim 3, further comprising a program configured to actuate:
means for determining which amino acid is phosphorylated among amino acids contained in the peptide or protein to be analyzed; and
means for producing output of information concerning which amino acid is phosphorylated.

5. A readable recoding medium storing a program to be used in a computer, the computer comprising:
means for entering information on an infrared absorption spectrum of a peptide or protein, the infrared absorption spectrum being determined using an infrared spectrophotometer;
means for storing the information on infrared absorption spectrum entered by the input means;
means for producing output of an infrared absorption spectrum determined based on at least the information stored in the storage means; and
means for reading information from a medium readable by the computer,
wherein the program is the phosphorylation determination program of one of claims 3 and 4.
